# EUROPEAN PATENT APPLICATION

(11) **EP 0 783 045 A2**
(43) Date of publication of application: **09.07.1997**
(21) Application number: 96120121.7
(22) Date of filing: 13.12.1996
(51) Int. Cl.: C25D 5/56, A47J 36/02

(54) **Process for the metallization of plastic materials**

(30) Priority: 15.12.1995 IT AN950061
(71) Applicant: Paradisi, Sergio, 60010 Barbara (AN) (IT)
(72) Inventor: Paradisi, Sergio, 60010 Barbara (AN) (IT)
(74) Representative: Dini, Roberto, Dr. Ing.

(57) **Abstract**

Metalizing process for plastic materials, of the type providing for a metalization of plastic materials through a galvanic process, with a preliminary deposition of a metal layer in order to make conductive the plastic materials, which comprises the following steps:
a) glazing of the plastic material part;
b) deposition of a metal layer on the surface of the plastic material part, in order to make it conductive;
c) metalization by galvanic process.

## Description

The present invention refers to a metalizing process for plastic materials.

Metalizing processes are generally known, which occur by evaporation, i.e. by evaporating or sublimating metal that then condensates over the surface to be treated, or by galvanic way, i.e. by means of galvanic baths wherein the coating of the surfaces to be treated is obtained through electrochemical phenomena.

The use of galvanic baths appears particularly suitable for industrial processes with respect to the evaporation process; however, it has some inconveniences whenever used in relation to plastic materials, due to its applicative limits related to the physical and chemical characteristics of such materials.

ABS material, for instance, can be efficiently metalized through a galvanic process, using high performing and low-cost production systems; however, like all thermoplastic materials, it is not clearly suitable for use in those fields of application where strength and resistance to deformation are required against temperature, for instance in the field of household cooking appliances, where high temperatures around 100°C can be reached even outside the cabinets.

This fact hinders the use of thermoplastic materials for the production of chrome-plated parts, such as knobs, indicator dials, handles and any other part located near a heat source.

In such an application field, the use of plastic materials would be particularly advantageous, to replace the corresponding metal parts in view, due to the higher thermal insulation they can offer. However, for an equivalent and satisfactory aesthetic result, plastic materials need to be chrome-plated.

On the other hand, it is also known that some thermosetting resins, specifically phenolic resins, can be chrome-plated by galvanic baths, among which for instance Bakelite PF7550, which are capable of withstanding very high temperatures, and at least the working temperatures of household appliances.

Said thermosetting resins are therefore suitable for manufacturing for instance low heat- conductive undeformable knobs, but with the problem that they cannot maintain their metalization at the working temperatures, and that they are also particularly subject to abrasion; in fact, the metal film comes off, causing the loss of the aesthetic advantage of the chrome-plating.

Thus, the use of chrome-plated thermosetting resins is restricted to those applications, such as for instance the production of chrome-plated bottle caps for beauty products, which are not exposed to specific thermal cycles nor foreseen for long-lasting use.

In the other application fields where, due to cost, weight or physical reasons such as for instance heat conduction, metal parts should be possibly replaced with chrome-plated plastic materials, this results in being difficult, due to a poor adhesion of the metal film to the plastic.

It is the object of this invention to solve the above drawbacks and provide a metalizing process for plastic materials being improved with respect to the known processes.

Within this frame, it is the main object of the present invention to provide a metalizing process for plastic materials, which allows a better adhesion of the metal film to the plastic surface, so to make it capable of withstanding high temperature.

It is a further object of the present invention to provide a mechanical treatment process for thermosetting resins through which their galvanic metalization can be easily adapted to the industrial manufacturing and treatment processes of the existing plastic material, specifically industrial plants designed for ABS metalization.

In order to reach said purposes, it is the object of the present invention to provide a mechanical treatment process, to be applied on thermosetting resins to obtain their galvanic metalization, incorporating the features of the annexed claims.

Further objects, characteristics and advantages of the present invention will be apparent from the following detailed description, which is only supplied by way of a clarifying and not limiting example.

The part moulded in thermosetting plastic to be chrome-plated, e.g. phenolic resin of the Bakelite PF7550 type is submitted to a preliminary mechanical treatment by vibrofinishing.

Said vibrofinishing treatment is carried out by the action of in-line microvibrators or polyvalent round microvibrators and, at the same time, by the action of abrasive ceramic or plastic particles, also called 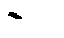 'chips", which can be mixed with abrasive powder for faster treatment and better result.

Thus, said vibrofinishing process determines a microabrasing action of the thermosetting plastic part, whose surface takes a typically glazing aspect.

Subsequently, the moulded part in thermosetting plastic is submitted to a metal deposition process, in itself known, through which its surface becomes conductive.

Said metallic deposition process usually occurs through a chemical reaction, which causes precipitation of a metal compound, forming a thin metal layer, such as copper or nickel.

As an alternative, the metal deposition can occur by immersion, spraying or even evaporation. Thus, the surface is made suitable for the metalizing electrochemical phase.

The metalizing electrochemical stage consists of the known galvanic deposition of heavy metals, such as copper, nickel, chrome, silver, gold and brass, on the surface of the part moulded in thermosetting plastic.

Summarizing, the process according to the present invention consists of the following steps:
- vibrofinishing;
- metal deposition;
- galvanic metalization.

The vibrofinishing process defines a surface of the moulded part having an improved sticking and adhesion characteristics for the subsequent metal layers, specifically for the correct and homogeneous deposition of the thin metal layer being chemically deposited.

The metal deposition condition the moulded part surface, so as to increase the efficiency of the subsequent and final galvanic metalizing process.

The characteristics and advantages of the present invention are apparent from the above description.

The chrome-plated moulded part resulting from the process is coated with a homogeneous metal layer, whose adhesion characteristics are considerably improved, both from a mechanical and heat resistance standpoint, and are capable for instance of withstanding the abrasion and thermal shock tests to which the components of household cooking appliances are to be submitted to.

Clearly, the efficiency of the vibrofinishing process depends upon the function of the abrasive particles. therefore, said abrasive particles can be sized in function of the higher or lower degree of finishing required for the moulded part to be metalized.

Also the dwelling time of the moulded part in the microvibrator is particularly significant, so that the length of the vibrofinishing process should be proportionate or adapted as much as possible to the dimensions and configuration of the object to he treated.

In addition, the vibrofinishing process advantageously allows to remove the flashes caused by the moulding process of the part.

The metalizing process herein described can also conveniently be carried out through galvanic metalizing systems already in use for ABS chrome-plating, requiring no changes, since the only additional process step is the mechanical vibrofinishing, which can be carried out separately.

The possibility of metalizing thermosetting plastic parts allows the operators in the household appliances field, and related fields, to obtain new specimen and models of components for the appliances, which up to now have been restricted to a mere design stage, due to the high manufacturing costs involved for the use of metallic materials.

In particular, the process according to the invention is particularly advantageous for the manufacturing of chrome-plated parts for cooking appliances, such as ovens and cookers, or other household appliances which are subject to high temperatures, such as for instance exhaust hoods.

It is obvious that many changes are possible to the skilled man to the metalizing process of plastic materials described above by way of example, without departing from the novelty spirit of the innovative idea, and it is also clear that in the practical actuation of the invention the components and materials indicated may differ from the ones described above and be replaced with technical equivalent elements.

For instance, glazing of the plastic material part can also be obtained through mechanical means other than the vibrofinishing process with ceramic or plastic particles, using for instance a sand-blasting process.

Abrasive powder in the vibrofinishing process, in addition to the ceramic or plastic particles, is required depending upon the characteristics of the material to be treated and the glazing finishing to be achieved; therefore, the vibrofinishing can be carried out using ceramic or plastic particles alone.

## Claims

1. Metalizing process for plastic materials, of the type providing for a metalization of plastic materials through a galvanic process, with a preliminary deposition of a metal layer in order to make conductive the plastic materials, characterized in that the following steps are provided:
a) glazing of the plastic material part;
b) deposition of a metal layer on the surface of the plastic material part, in order to make it conductive;
c) metalization by galvanic process.

2. Metalizing process for plastic materials according to Claim 1, characterized in that the glazing step of the plastic material part is realized through a vibrofinishing process.

3. Metalizing process for plastic materials according to Claim 2, characterized in that the vibrofinishing process is carried out by means of microvibrators and ceramic or plastic abrasive particles, mixed with abrasive powder.

4. Metalizing process for plastic materials according to Claim 3, characterized in that the plastic material part consists of thermosetting plastic, specifically phenolic resin type Bakelite PF7550.

5. Metalizing process for plastic materials according to Claim 4, characterized in that the plastic material part is a structure, in particular a handle or a knob, of a cooking appliance, in particular an oven.

6. Chrome-plated part for a cooking appliance, in particular oven handles or knobs, characterized in that it is obtained by moulding a thermosetting plastic material and metalized through a process that provides at least for its glazing and subsequent metalization by galvanic way.
